# EUROPEAN PATENT APPLICATION

(11) **EP 4 040 335 A1**
(43) Date of publication of application: **10.08.2022**
(21) Application number: 21204759.1
(22) Date of filing: 26.10.2021
(51) Int. Cl.: G06K 9/00, G06K 9/62, G06V 10/94, G06V 20/40, G06V 20/52

(54) **METHOD FOR MANAGING ONE OR MORE DEVICES**

(30) Priority: 04.02.2021 IT 202100002516
(71) Applicant: Geoinference S.r.l., 38068 Rovereto, (TN) (IT)
(72) Inventor: Maffione, Eugenio Maria, 38068 Rovereto TN (IT); Demaria, Andrea, 38068 Rovereto TN (IT)
(74) Representative: Perani & Partners S.p.A.

(57) **Abstract**

A method (1) of managing one or more apparatuses (100) comprising the steps of: a) cyclically capturing, by an imaging device (200), a corresponding image stream associated with a field of view (11) as viewed by the imaging device (200), the captured image stream comprising a plurality of temporally successive frames; b) sending the image stream to a data processing unit (210) associated with the imaging device (200); c) recognizing one or more targets (12) in the field of view (11) that has been captured in the image stream and a target state (St) for each recognized target (12) representative of the target (12); d) associating each recognized target (12) with a label (E) and a finite-state automaton (A) as a function of the corresponding label (E), each finite-state automaton (A) comprising two or more automaton states (SA), automaton state transition signals (SpA) for transition from one automaton state to another and automaton holding signals (SmA) for holding the automaton state (SA) and action signals (Sc) for managing, enabling and/or disabling one or more apparatuses (100); e) initializing each finite-state automaton (A) to an initial automaton state (SiA) selected from the states of the finite-state automaton (SA) as a function of the target state (St); f) generating an assessment signal (Sv) for each recognized target (12) as a function of the target state (St) and as a function of temporally successive frames; g) triggering each initialized finite-state automaton (A) by: g1) transitioning from the initial automaton state (SiA) to an altered automaton state (SfA) or from an altered automaton state (SfA) to another altered automaton state (SfA); or g2) holding the initial automaton state (SiA) or the altered automaton state (SfA); h) sending an action signal (Sc) to one or more apparatuses (200) for each finite-state automaton (A); i) managing the one or more apparatuses (200) according to the action signal that has been sent (Sc).

## Description

### Technical field

The present invention relates to a method of managing and controlling one or more apparatuses arranged in an environment such as intake works, collection tanks, parking lots or in the field of fish farming. Preferably, the method affords automated control of the apparatuses based on information from the environment. The present invention further addresses a system that can implement the method of managing one or more apparatuses.

### Background art

Sequences of processes are known in the art to be automated by specifically programming one or more apparatuses to perform sequences of predetermined actions. Automation is obtained, for example, by combining a sequence of inputs from one or more sensors arranged on the apparatus or in the environment in which the apparatus is located. Of all known algorithms and mathematical models, use is often made of finite-state automata (or finite-state machines) which, once the transition function for the specific process and the corresponding apparatus has been set, can send the apparatus instructions to be performed, thereby automating the process. In certain cases, optical sensors are also known to be used to acquire information about a specific environment and target to trigger a corresponding ad hoc finite-state automaton.

### Problems of the prior art

Nevertheless, it should be noted that the prior art methods of automation by means of finite-state automata using optical sensors cannot be easily adapted to situations other from those for which they have been programmed and are thus only applicable to specific cases. Moreover, these methods use an optical sensor for each finite-state automaton in use, which increases automation costs for a process or apparatus.

A further drawback of prior art methods is the need for a strong specialization of the components, deriving from the specific characteristics of the scenario to be managed. Specifically, this specialization leads to an increase in complexity, costs and implementation times.

Finally, due to their high complexity, these methods require a control and analysis system separate from the optical sensor, which increases response times (latency) of the system and management costs.

### Object of the invention

The object of the present invention is to provide a method of managing one or more apparatuses that can obviate the above discussed drawbacks of the prior art.

In particular, the present invention has the object to provide a method that can afford real-time control of the automation of one or more apparatuses based on information from an environment, thereby optimizing the times for action on the apparatuses.

The aforementioned technical purpose and objects are substantially fulfilled by a method of managing one or more apparatuses and by a system for managing one or more apparatuses, that comprise the technical features as disclosed in one or more of the accompanying claims.

### Benefits of the invention

Advantageously, the method and the system of the present invention can reduce the costs for managing one or more apparatuses and an environment being monitored.

Advantageously, the method and the system of the present invention can reduce bias errors in operation by providing active and periodic control on an environment of interest.

Advantageously, the method and the system can simplify the management work on one or more apparatuses.

### BRIEF DESCRIPTION OF THE FIGURES

Further features and advantages of the present invention will result more clearly from the illustrative, non-limiting description of a preferred, non-exclusive embodiment of a method and a system for managing one or more apparatuses as shown in the accompanying drawings:
- Figure 1 shows a block diagram of the method of managing one or more apparatuses according to one embodiment of the present invention;

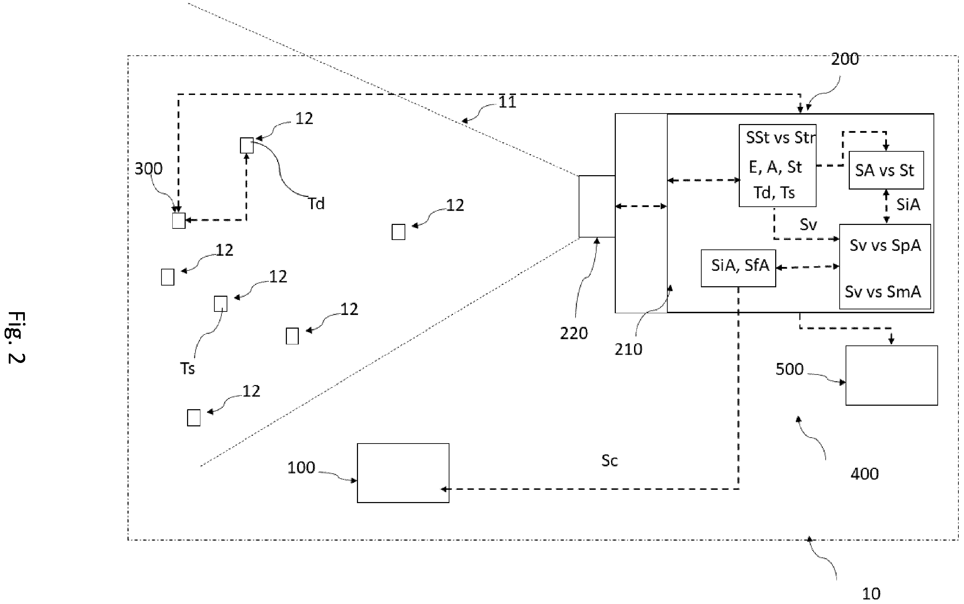

- Figure 2 shows a block diagram of a system for managing one or more apparatuses according to one embodiment of the present invention;
- Figure 3 shows a finite-state automaton according to one embodiment of the present invention.

### DETAILED DESCRIPTION

Even when not expressly stated, the individual features as described with reference to the particular embodiments shall be intended as auxiliary to and/or interchangeable with other features described with reference to other exemplary embodiments.

The present invention relates to a method 1 of managing one or more apparatuses 100 arranged in an environment 10. Preferably, the method of managing one or more apparatuses 100 is implemented using one or more imaging devices 200, arranged in the environment 10 and/or proximate thereto, in signal communication with the one or more apparatuses 100.

The method 1 of the present invention can manage and control, as well as enable and disable one or more apparatuses associated with the environment 10 or even to another environment. In other words, the method of the present invention can automate management of one or more apparatuses based on a plurality of pieces of information about targets 12 arranged in the environment 10, that can be acquired and processed by means of the imaging devices 200 and optionally in combination with sets of sensors 300 associated with the targets 12 and/or the environment 10 itself. Specifically, the method 1 can change the state of the apparatuses, a state of an apparatus referring to the working conditions that can be associated with the apparatus. For example, in intake works in which the apparatus may be a lock, the state of the lock may be open to allow the passage of water, closed to prevent the passage of water or intermediate to regulate the flow of water.

As used herein, an environment 10 refers to any place that can have one or more automatable apparatuses 100 associated therewith to control that particular environment. For example, the environment 10 may be a parking lot for management of the available/occupied spaces, a water collection tank for intake works, a zone near the water collection tank for intake works, with filtering grids for water collection. It should be noted that each environment 10 has its own apparatuses 100 to be managed by the method 1, therefore possible apparatuses in the above parking lot examples may be the entry columns associated with the parking space, whereas in intake works and collection tanks the apparatus may be a lock system (a servo-controlled lock gate).

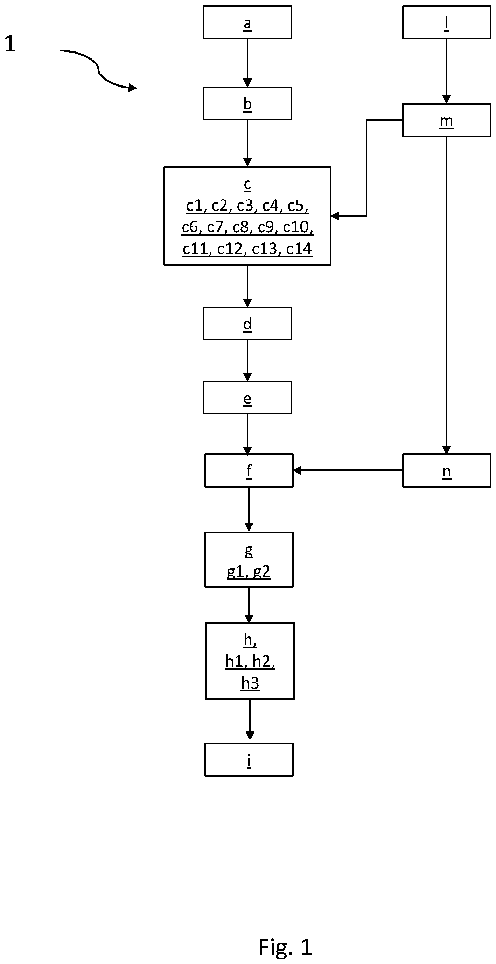

The method of managing one or more apparatuses of the present invention comprises the following steps, that are carried out according 1 to a preferred embodiment as shown in Figure 1.

Preferably, the method 1 includes an initial step of positioning one or more imaging devices 200 in one or more environments 10 for capturing information thereof, as further described below. Such environment information 10 includes, for example, the recognition of a target 12 and a corresponding target state St. It should be noted that the initial positioning step includes establishing signal communication between the imaging devices 200 and the one or more apparatuses 100 to be managed and controlled. Preferably, the signal communication between the imaging devices 200 and the apparatuses 100 is established by means of connection modules associated with each imaging device 200 and each apparatus 100, which allows wireless, Bluetooth or wired connection for signal exchange.

The method comprises the step of a) cyclically capturing, by an imaging device 200, a corresponding image stream associated with a field of view 11 as viewed by the imaging device 200. Thus, the imaging device 200 can capture image streams associated with targets 12 arranged in the field of view 11. Specifically, the imaging device 200 located inside an environment 10 views and captures information about its field of view 11.

As used herein, a target 12 refers to any object, subject and entity in an environment 10. For example, a target 20 may refer to a machine, a person, a water or liquid grate.

According to a preferred embodiment, the step a) includes capturing image streams comprising a plurality of temporally successive frames. It should be noted that each image has pixels associated therewith. Preferably, the image streams comprise two-dimensional color images of the field of view 11 and/or information about the distance of each pixel of the images from a reference frame defined by the imaging device 200.

According to a preferred embodiment, the step a) includes capturing a first image stream and a second image stream. In particular, the first image stream relates to the environment 10. Preferably, the first image stream comprises the two-dimensional color images of the environment 10. On the other hand, the second image flow relates to the distances of the pixels from the reference frame. Preferably, the method 100 comprises a step of synchronizing the first image stream and the second image stream. Preferably, the step of synchronizing includes associating each pixel of the images of the first image stream with a corresponding distance value of the second image stream. Then, the step a) includes storing the synchronization between the first image streams and the second image stream which has been performed in the step of synchronizing.

The method 1 comprises a step of b) sending the image streams to a data processing unit 210 associated with the imaging device 200. Namely, the step b) includes sending the captured image streams from the imaging device 200 to the data processing unit 210 in signal communication with the imaging device 200. More preferably, the step b) comprises a step of at least temporarily storing the image streams in the data processing unit 200. In particular, the temporary storage of the image stream optimizes computational resources for the subsequent steps.

The method 1 comprises the step c) of recognizing one or more targets 12 located in the field of view 11 that is being captured in the image stream. The step c) also includes recognizing a target state St for each recognized target 12, representative of the target 12. Specifically, the step c) can identify the targets 12 located inside the field of view 11 and their target state St representative and characteristic of the target 12. It should be noted that a plurality of possible target states St may be associated with each target 12. For example, when using the method to manage a car park, if the targets 12 are the individual parking spaces, the recognizable target state is a parking space occupied state or a parking space available state.

Preferably, the step of recognizing c) includes analyzing each image, or each frame, of the first image stream to recognize the targets 12 in the corresponding image. It should be noted that the step of recognizing c) includes recognizing one or more targets 12 with respect to a background and with respect to other targets 12 in the environment.

More preferably, the step c) is carried out by a neural network-based algorithm associated with the environment 10. In detail, the neural network-based algorithm may be optimized by size, namely quantized. Preferably, the neural network-based algorithm is trained to recognize one or more targets 12 in the images of the first image stream and, as explained below, the corresponding target states. More preferably, the neural network-based algorithm is configured, in other words trained, to recognize specific targets 12 based on the environment 10. For example, if the first image stream is captured proximate to the intake works or in a parking lot, the neural network-based algorithm can be trained to recognize environment specifications, water grates or parking spaces respectively.

Advantageously, the use of an optimized and quantized neural network-based algorithm configured to recognize targets 12 in a specific environment 10 reduces the required computational cost.

Preferably, at step c) the method 1 can also identify targets 12 of different types in the same environment 10, using one or more neural network-based algorithms loaded in the data processing unit 210.

According to a preferred embodiment, the step c) comprises the step of geolocating the imaging device 200 to recognize the environment in which the imaging device 200 is placed using corresponding geolocation modules or by the action of an operator who sets and defines the location of the imaging device 200. Then, once the environment has been recognized, the step c) comprises a step of loading the neural network-based algorithm suitable for the selected environment and for the targets 12 therein.

Advantageously, loading of a specific algorithm allows the method to be adapted to different types of environment while maintaining a reduced computational cost and easier management of specialized neural networks.

According to a preferred embodiment, the step c) includes identifying one or more static targets Ts in the field of view 11 as viewed by the imaging device 200. It should be noted that the method 1 may be used to monitor certain environments 10 in which one or more targets 12 are static with respect to imaging device 200, but may change the target state St over time.

Therefore, the step c) comprises a step of c1) recognizing one or more static targets Ts in the image stream as a function of successive frames. In other words, the static targets Ts are distinguished and recognized among the targets in the field of view 11. Upon recognition of the static targets St, the step c) includes the parallel and/or alternative steps of:
c2) generating count values for any recognized static targets with respect to their specific classifications;
c3) calculating size values for the recognized static targets,
c4) calculating relative distance values between the recognized static targets.

Preferably, each recognized static target St is associated with a bounding box, which in turn is associated with coordinates with respect to the reference frame. These coordinates comprise values on the image plane of the first image stream and possibly spatial information associated with the second image stream. Then, the steps c2) and/or c3) and/or c4) are carried out using analysis algorithms residing in the data processing unit 210, associated with the imaging device 200. In particular, the targets 12 are counted as a function of the bounding boxes between successive frames and/or the targets are graded to know for example dimensions or weight and/or the distance between individual targets or target groups as a function of the corresponding bounding boxes.

According to a preferred embodiment, the step c) of recognizing one or more targets 12 includes identifying one or more dynamic targets Td moving relative to the imaging device 200. In other words, the step c) includes distinguishing, among the targets in the field of view 11, dynamic targets Td moving relative to the imaging device 200. These include for example people moving in a monitored area or fish to be selected for sale in the field of fish farming.

Therefore, the step c) comprises a step of c5) recognizing one or more dynamic targets Td in the first image stream to track the dynamic target Td within the field of view 11. According to a preferred embodiment, the method can track dynamic targets Td entering and exiting the field of view 11 if previously recognized.

Preferably, the step c) following recognition of the dynamic targets Td comprises the step of c6) calculating the path of each recognized dynamic target Td. Then, the step c) comprises a step of c7) tracking each recognized dynamic target Td through temporally successive frames as a function of the path. It should be noted that, as mentioned above, the dynamic target Td may be tracked both within the field of view 11 and between fields of view 11 viewed by different imaging devices 200.

Also for dynamic targets Td, the step c) includes performing he parallel and/or alternative steps of:
c12) generating count values for any recognized dynamic targets with respect to their specific classifications;
c13) calculating size values for the recognized dynamic targets,
c14) calculating relative distance values between the recognized dynamic targets.

It shall be noted that each recognized dynamic target Td is associated with a bounding box, which in turn is associated with coordinates with respect to the reference frame, like for static targets Ts. In the case of dynamic targets Td, the coordinates associated with the movement of the targets in the field of view 11, comprise values in the image plane of the first image stream and possibly spatial information. Then, analysis algorithms residing in the data processing unit 210 are used to perform the steps of generating count values of the recognized dynamic targets, calculating size values of the recognized static dynamics and calculating relative distance values between the recognized dynamic targets.

Advantageously, the method 1 can identify static targets Ts and dynamic targets Td within the field of view 11 and measure and quantify characteristic quantities of the recognized targets.

According to a preferred embodiment, the step c) includes recognizing the target state St associated with recognized targets 12, either static targets Ts or dynamic targets Td. This recognition of the target state St is achieved by a comparison between reference target states Str. Specifically, the reference target states STR are periodically loaded and/or updated in the data processing unit 210.

Preferably, the step c) comprises the step of c8) identifying target characteristic reference parameters for each recognized target 12. Specifically, each target 12 may be associated with a given type such as persons, animals, motor vehicles, liquids, passage areas (grates) and at the same time, characteristic reference parameters may be associated with each target 12, for example, possible parameters are standing position, sitting position, lying position for persons, position and size for animals, degree of dirt for liquids and degree of clogging for passage areas. It should be noted that these characteristic reference parameters are preset and loaded into the data processing unit 210. Thus, the algorithms residing in the data processing unit 210 identify such parameters with reference to the recognized target 12.

Once the characteristic reference parameters have been identified, the step c) comprises a step of c9) generating a target state signal SSt as a function of the reference parameters. Specifically, the target state signal SSt comprises target information about a time instant associated with the identified frames and reference parameters.

The step c) includes a subsequent step c10) of comparing the target state signal SSt with the reference target states Str. Finally, the step c) comprises a step c11) of associating a target state St with the recognized target 12 as a function of the comparison by selecting from the reference target states Str. Specifically, once the characteristic parameters have been identified, these define the state of the recognized target 12, whereas the comparison with the reference target States Str can define and identify the correct target state St to carry out the subsequent steps of the method.

It shall be noted that step c) is performed periodically to be able to identify the variation of the target state St over time, in other words between temporally successive frames.

Preferably, the steps for recognition of the target states Str are carried out by means of neural network-based algorithms specific for the environment 10, as described previously, for recognizing the targets 12.

More preferably, the step c) includes recognizing one or more targets 12 and the corresponding target state Str at the same time, since the neural network-based algorithms are trained to recognize both the target 12 and its target state St. For example, in intake works for collection tanks, the algorithms are configured to recognize a water grate allowing the passage of water and filtration of river debris and to simultaneously recognize the grate as clean (free of debris), clogged (full of debris) or in an intermediate state. In a further example, in the case car park monitoring, the algorithms are configured to recognize the parking lot with its parking spaces and at the same time whether the parking spaces are available or occupied by a car.

Advantageously, the recognition of targets 12 and their target states St allows proper assessment of the environment 10.

The method 1 comprises the step of d) associating a label E with each recognized target.. Specifically, the label E allows the algorithms residing in the data processing unit 210 to tag and track the recognized targets 12 through successive frames. Furthermore, the step d) includes associating a finite-state automaton A with each recognized target 12 as a function of the label E. In other words, the finite-state automaton A is instantiated on the target 12 as a function of the label E.

It should be noted that the label E relates to the target 12 with which a target status St is associated.

As used herein, finite-state automata may be understood as a finite-state automaton model comprising two or more states. Each automaton model is configured to be instantiated on one or more targets 12 as a function of the label E associated with the corresponding target.

It should be noted that each label E of the targets 12 may have a finite-state automaton associated therewith (or instantiated thereon). According to alternative embodiments, each label E may have a plurality of finite-state automata associated therewith.

Preferably, one or more finite-state automata A are loaded and/or updated in the data processing unit 210 as a function of the environment 10 in which the imaging device 200 is located. Once again they can be loaded according to the location of the imaging device 200 like in neural network-based algorithms.

According to a preferred embodiment, the step d) of associating encompasses keeping the label E and the finite-state automaton A)associated with the recognized target 12 in temporally successive frames. Thus, the control and management of the apparatuses 100 is facilitated, because computational resources may be saved by avoiding continuous updating of the finite-state machine and of the labels.

Each finite-state automaton A comprises two or more automaton states SA, automaton state transition signals SpA for transitioning from one automaton state to another and automaton holding signals SmA for holding the automaton state SA and action signals Sc for managing, enabling and/or disabling one or more apparatuses 100.

It should be noted that finite-state automata A, also known as finite-state machines are mathematical functions that afford process automation and/or control/management of apparatuses 100 as a function of the automaton states SA and of whether a transition between automaton states SA occurred or a corresponding state is held. The transitions from one automaton state SA to another and/or their being held are given by the automaton state transition signals SpA which identify the transition from one automaton state SA to another automaton state SA as well as by the automaton holding signals SmA that identify the transition from one state to the same state. It should be noted that the automaton state transition signals SpA and the automaton holding signals SmA depend on the automaton state SA in which the finite-state automaton is. In other words, the automaton state transition signals SpA and the automaton holding signals SmA define transition functions between automaton states SA. Therefore, the transition between automaton states SA and state holding, as explained below, depend on the automaton state transition signals SpA and the automaton holding signals SmA, as well as on the transition function. Specifically, the transition between automaton states SA depends both on the identified target state St and on the automaton state SA in which the finite-state automaton is. In other words, each automaton state SA is associated with automaton signals SpA, SmA characteristic of the automaton state SA, allowing the finite-state automaton to evolve to specific other automaton states SA or to be held in the automaton state SA.

The following table shows an example of the possible transition combinations of automaton states SA or holding thereof. Specifically, the following are indicated:
- S1, S2, S3 as automaton states SA;
- SpA1, SpA2, SpA3 as the automaton state transition signals SpA
- SmA1, SmA2, SmA3 as holding signals SmA.

The first row shows the starting automaton states, whereas the first column shows the automaton state transition signals SpA and the automaton holding signals SmA, and the intersection between rows and columns identifies the automaton state following automaton state transition or holding.

| | S1 | S2 | S3 |
|---|---|---|---|
| SpA1 | - | S1 | S2 |
| SpA2 | S2 | S3 | S1 |
| SpA3 | S3 | - | - |
| SmA1 | S1 | - | - |
| SmA2 | - | S2 | - |
| SmA3 | - | - | S3 |

It should also be noted that, in the management and control of the apparatuses 100, the transition between automaton states SA and state holding results in a corresponding action signal Sc addressed to one or more apparatuses 100. Specifically, the finite-state automaton A related to the target state St affords control of one or more apparatuses 100 using the action signals SC.

For example, for the hydroelectric field, if the method is associated with intake works for collection tanks, the apparatuses to be managed are lock apparatuses for corresponding intake works and/or collection tanks (also known as lock gates). In the collection tanks the target 12 is the collection tank and the target state St is the degree of dirt of the tank and the water contained therein. Concerning the relative finite-state machine for collection tanks:
- the automaton states SA comprise a closed tank state and an open tank state;
- the automaton holding signals SmA and the automaton state transition signals SpA are associated with the degree of dirt of the tank and the water;
- the action signals Sc are associated with the opening and closing operations of the lock apparatus.

For intake works, the target 12 is the grate for filtering water and the target state St is the degree of clogging of the grate. Concerning the corresponding finite-state machine for intake works:
- the automaton states SA comprise a closed tank state and an open tank state;
- automaton holding signals SmA, and automaton state transition signals SpA are associated with the degree of clogging of a grate for water passage;
- action signals Sc are associated with the opening and closing operations of a lock device.

A further example is applied to parking lot control in which the apparatuses are devices for indicating available parking spaces. Here, the targets 12 are the individual parking spaces and the target state St concerns parking occupancy. Concerning the corresponding finite-state automaton A for parking:
- the automaton states SA comprise a parking space available state and a parking space occupied state;
- the automaton holding signals SmA, and the automaton state transition signals SpA are associated with the occupied and available states of a parking space;
- the action signals Sc are associated with a parking space being freed up or occupied to indicate an available parking space to a user.

In a further example the method is applied in the field of fish farming where the apparatuses are devices for the passage of fish to direct it to sale or to return it to farming. In this case the targets 12 are fish and the target state St is the fish size. Concerning the corresponding finite-state automaton A:
- the automaton states SA include a fish state having a correct size and a fish state having a wrong size;
- the automaton holding signals SmA and automaton state transition signals SpA are associated with the size of the fish and corresponding tolerances;
- the action signals Sc are associated with the opening of the passage device according to the fish size.

It should be noted that the present method 1 may be used and applied to different fields in addition to those indicated above, such as security, first-aid, carpentry or quarries.

The method 1 comprises the step e) of initializing each finite-state automaton to an initial automaton state SiA selected from finite-state automaton states SA as a function of the target state St. Specifically, once the target 12 has been recognized and the finite-state automaton A has been associated, it is necessary to identify the state in which such finite-state automaton starts to have its effects for management and control of one or more apparatuses 100.

In particular, the step e) includes selecting a finite-state automaton A by comparison between the target state St and the automaton states SA and selecting an initial automaton state SiA in which the finite-state automaton has to be initialized.

Specifically, the finite-state automaton A comprises initialization signals configured to initialize the finite-state automaton A to an initial automaton state SiA as a function of the detected target state St for selection of the finite-state automaton A and its initialization. In detail, the step e) includes comparing the target state St with the initialization signals to select the correct initial automaton state SiA. More in detail, the step e) includes selecting an automaton state SA among the automaton states SA of the finite-state automaton associated with the target 12 as a function of the initialization signal by identifying it as the initial automaton state SiA, i.e. the automaton state SA from which the finite-state automaton may evolve to other automaton states SA. It should be noted that the initialization signals may correspond to the automaton state holding signals SmA and to the automaton state transition signals SpA representative of the finite-state automaton entering the corresponding automaton state SA.

Preferably, using selection algorithms residing in the data processing unit, the step of initializing e) includes recognizing among the automaton states SA the one that can be associated with the target state St, thereby initializing the finite-state automaton to an initial automaton state SiA.

The method 1 comprises a step of f) generating an assessment signal Sv for each recognized target 12 as a function of the target state St between temporally successive frames. Specifically, the step f) can monitor the evolution of the target state St over time by generating an assessment signal Sv as a function of the target state St.

Preferably, the step of f) generating an assessment signal encompasses generating an assessment signal Sv by comparing the target states St in temporally successive frames. In detail, the method includes constantly monitoring the target state St between successive frames, and the transition between target states or state holding generates an assessment signal Sv which allows performance of the subsequent steps. This assessment signal Sv accounts for the target state St to act on the finite-state automaton A.

The method 1 comprises the step g) of triggering each initialized finite-state automaton A by executing an automaton state transition or an automaton state holding action. Specifically, the step g) includes transitioning from the initial automaton state SiA to an altered automaton state SfA, from an altered automaton state SfA to another altered state SfA, from an altered automaton state SfA to the initial automaton state SiA or holding the initial state SiA or the altered state SfA. Specifically, the finite-state automaton A is triggered by comparison between the assessment signal Sv and the holding signals SmA or the state transition signals SpA to identify the need to transition from one automaton state SA to another or to hold an automaton state SA to control and manage the one or more devices 100.

In detail, the step g) for each finite-state automaton A comprises the steps of:
g1) executing an automaton state transition action by transitioning from the initial automaton state SiA to an altered automaton state SfA or from an altered automaton state SFA to another altered automaton state SFA if the assessment signal Sv corresponds to an automaton state transition signal SpA associated with the transition between one state and another and vice versa;
g2) executing a state holding action by maintaining the initial automaton state SiA or the altered automaton SfA if the assessment signal Sv corresponds to the automaton holding signal SmA associated with the respective automaton state SA.

As mentioned above, the automaton state transition from an initial automaton state SiA to an altered automaton state SfA (or vice versa or between altered automaton states SfA) is a function of the comparison between the assessment signal Sv and the automaton state transition signals SpA and the automaton holding signals SmA. Specifically, the comparison algorithms residing in the data processing unit 210 compare the assessment signal Sv with the respective automaton state transition signals SpA and the respective automaton holding signals SmA and can change the automaton state SA or hold it based on the match. In detail, if the assessment signal Sv matches an automaton state switching signal SpA, the finite-state automaton receives the instruction to transition either from the initial automaton state SiA to an altered state SfA or from an altered state SfA to another altered state SfA or from the altered state SfA to the initial state SiA or a combination thereof

In other words, the comparison allows transition to occur based on the transition function between one automaton state SA and another.

Concerning state holding, either in the initial state SiA or in an altered state SfA, it is also a function of the comparison between the assessment signal Sv and the automaton holding signals SpA and the automaton holding signals SmA. In detail, the comparison algorithms residing in the data processing unit 210 compare the assessment signal Sv with the respective automaton state transition signals SpA and the respective automaton holding signals SmA and can change the automaton state SA or hold it based on the match. In detail, if the assessment signal Sv matches an automaton holding signal SmA, the finite-state automaton receives the instruction to hold the automaton state. Therefore, if the finite-state automaton A is in the initial automaton state SiA, it will remain in that automaton state, and if the finite-state automaton A is in an altered state SFA it will remain in that automaton state.

Thus, by comparing the assessment signal Sv, which accounts for the target state St, and of the automaton state transition signals SpA and the automaton holding signals SmA which account for the target 12 and the corresponding instantiated finite-state automaton, each finite-state automaton A can evolve between different automaton states SA or remain in an automaton state as a function of the corresponding target and of the associated and variable target state St.

In other words, the comparison allows transition to occur based on the transition function between one automaton state SA and another.

The method 1 comprises a step of h) sending an action signal Sc to one or more apparatuses 100 for each finite-state automaton A as a function of the combination of the automaton state transition signal SpA and the automaton state SA before the automaton state transition if the automaton state transition has occurred and as a function of the combination of the automaton holding signal SmA and the automaton state SA if the automaton state SA has been held.

According to a preferred embodiment, the step of h) sending an action signal comprises the step of h1) selecting an action signal Sc from the action signals of the finite-state automaton A as a function of the combination of the automaton state transition signal SpA and the automaton state SA before the automaton state transition if the automaton state transition has occurred and as a function of the combination of the automaton holding signal SmA and the initial automaton state SiA or the altered automaton state SfA if automaton state holding has occurred;

Specifically, in case of automaton state transition, the action signal Sc is a function of both the automaton state SA preceding the automaton state SA in which the automaton is after the automaton state transition, and the automaton state transition signal SpA associated with the state transition. For example, if the finite-state automaton is at the initial automaton state SiA, and if after a change in the target state St, it moves to an altered automaton state SfA, then the action signal Sc is selected and sent as a function of the initial state SiA and of the state transition signal SpA that allowed automaton state transition between the initial automaton state SiA and that altered automaton state SfA.

Alternatively, in case of automation state holding, the action signal Sc is a function of both the automaton state SA in which the finite-state automaton is and the automaton holding signal SmA associated with holding of that automaton state SA. For example, if the finite-state automaton is in the initial automaton state SiA and, after a target state St is held, it still holds the initial automaton state SiA, then the action signal Sc is selected and sent as a function of the initial state SiA and of the automaton holding signal SmA which allowed the automaton state to be held at the initial state.

In other words, the action signal Sc is a function of a starting automaton state and of the automaton holding signal SmA or of automaton state transition signal SpA associated with that determined starting automaton.

This action signal Sc comprises instructions for the apparatus 100, for example to perform certain actions. For example, in the case of a lock apparatus in intake works and/or in collection tanks in the hydroelectric field, the instructions for the apparatus 100 may be the instruction to open the lock gate, close the lock gate or partial opening indications.

Once the action signals Sc have been selected, the step h) comprises the step h2) of selecting the one or more apparatuses 100 associated with the imaging device 200, preferably adapted to receive the selected action signal Sc.

Finally, the step h) comprises the step of h3) of sending the action signal Sc to the one or more selected imaging devices 200.

The method 1 comprises the step of i) managing the one or more apparatuses as a function of the action signal Sc that has been sent. In detail, this action signal Sc affords active and real-time control of each apparatus 100 associated with the one or more imaging devices 200 as a function of the evolution of the target state St of one or more targets recognized in the field of view.

It should be noted that the method 1 also affords management and control of a plurality of apparatuses 10 using a single imaging device 200. Specifically, the method 1 can associate each recognized target 12 with a finite-state automaton A and thus control the evolution of each finite-state automaton in real time as a function of the target state St of each recognized target.

Advantageously, the method 1 can manage a plurality of apparatuses 100 as a function of a plurality of targets 12 with which a corresponding finite-state automaton A is associated

According to a preferred embodiment, in order to better define the target state St and generate the assessment signal Sv, the method 1 can combine the information from the imaging devices 200 as described above with information from one or more sensors 300. For example, such sensors 300 can acquire information about temperature, pressure, humidity or weather conditions. It should be noted that the sensors 300 are arranged in the environment and are preferably associated with the targets 12 arranged in the environment.

More preferably, these sensors 300 are in signal communication with the imaging device 200 to send the acquired information, whether raw or already processed by a processing unit associated with the sensors.

According to a preferred embodiment, the method 1 comprises the step 1) of acquiring one or more datasets Set for a recognized target 12 by means of the one or more sensors 300 associated with targets 12 in the environment 12 and in signal communication with the imaging device 200. Specifically, these sensors 300 can be associated with the targets 12 located in the environment to acquire information thereupon. Preferably, the step 1) includes associating one or more sensors 300 with targets 12 located in the environment and with one or more imaging devices 200. Preferably, the step 1) includes coordinating the sensors 300 with the corresponding recognized targets 12.

The method comprises a subsequent step of m) associating the datasets set with their respective recognized target 12 to recognize the target state St. Specifically, since the neural network-based algorithms account for the acquired image stream and the dataset of a target, they can more accurately recognize the target state St to operate by the finite-state automaton A on the apparatus 100 in an optimized manner.

Furthermore, the method 1 also comprises a step of n) generating an assessment signal Sv as a function of the comparison between target states St in temporally successive frames and as a function of the datasets Set. Also in this case, since the algorithms residing in the data processing unit 210 combine the information from the imaging devices 200 and from the sensors 300, they can monitor the target state St over time to generate an assessment signal Sv that is as correct as possible. Specifically, according to the present embodiment, the assessment signal Sv is generated as a function of successive frames and datasets that have been sent and received by the imaging device 200.

### APPLICATION EXAMPLE

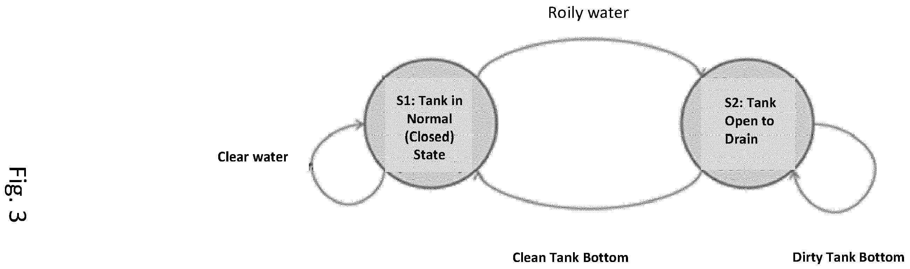

An explanatory example of the finite-state machine as shown in Figure 3 is given below. Here, the method of the present invention is used in the hydroelectric field in water collection tanks that require debris control in water before the latter reaches the turbines. If the water has debris or an excessive degree of dirt, the tank is drained to prevent the dirty water from entering the turbine, and to also allow the bottom of the tank to be cleaned of debris by the action of the incoming water flow. As mentioned above, here the target 12 is represented by the collection tank, whereas the target state St is represented by the degree of dirt of the tank and the water (for example, as shown in Figure 3, the target states may be "Roily Water", "Clean Water", "Dirty Bottom", "Clean Bottom" and may have corresponding state automaton transition signals SpA and automaton state holding signals SmA associated therewith). Here, the imaging device 200 is located in or near the collection tank and in signal communication with a lock apparatus (in other words a servo-controlled gate) that is able to open or close an opening for draining the water contained in the collection tank. Once the method 1 has been started, the target 12 and the target state St, for example clear water are recognized, and then the finite-state automaton of Figure 3 is associated with the target 12. According to the present invention, the finite-state automation is initialized to an initial state of "S1: Tank in Normal (Closed) State" because the target state St indicates "Clear Water" (match between the initialization signal and the corresponding target state St at the time of initialization). The method continues to monitor the tank by generating an assessment signal Sv which, if the water remains clear, will match the holding signal for the initial state of "S1: Tank in Normal (Closed) State" and therefore the action signal Sc sent to the apparatus 100 comprises the instruction to keep the lock closed in closed state. In the case of a storm, for example, debris may enter the collection tank, thereby soiling and making water roily or generating gravel or debris deposits on the bottom of the tank. During periodic control of the captured image stream, the method 1 detects a different target state St and thus generates an assessment signal Sv comprising the information of a target state change. The algorithms in the data processing unit 210 compare the assessment signal Sv with the automaton state transition signals SpA and if they detect a match (in this case a "Roily Water" signal), they trigger the automaton and move from the initial automaton state SiA to the altered automaton state SfA, i.e. "S2: Tank Open to Drain". This transition corresponds to the transmission of the action signal Sc associated with the initial automaton state SiA "S1: Tank in Normal (Closed) State" and with the automaton state transition signal SpA "Roily Water" which comprises the instruction to open the lock to drain the tank. It should be noted that, at a later time, the automaton can evolve, according to the method as described above, to move back to the initial state either or to hold the altered state SfA until the altered state conditions are kept. Based on a periodic control and the generation of the corresponding assessment signals Sv, the finite-state machine A evolves by receiving, for example, the automaton holding signal SmA "Dirty Tank Bottom" until the water flow cleans the bottom of the collection tank and moves the automaton back to the initial state once it has checked that the target state St has reached the state "Clean Tank Bottom".

An exemplary table of the above application example is given below. It shows, like the table above, the possible transition combinations of automaton states SA or holding thereof. Specifically, the following are indicated:
- "S1: Tank in Normal (Closed) State" and "S2: Tank Open to Drain" as the automaton states SA;
- "Roily water" and "Clean Tank Bottom" as the automaton state transition signals SpA
- "Clear water" and "Dirty Tank Bottom (Gravel)" as holding signals SmA

The first row shows the starting automaton states, whereas the first column shows the automaton state transition signals SpA and the automaton holding signals SmA, and the intersection between rows and columns identifies the automaton state following automaton state transition or holding.

| | S1: Tank in Normal State (Closed) | S2: Tank Open to Drain |
|---|---|---|
| Clear water | S1: Tank in Normal State (Closed) | - |
| Roily Water | S2: Tank Open to Drain | - |
| Clean Tank Bottom | - | S1: Tank in Normal State (Closed) |
| Dirty Tank Bottom (Gravel) | - | S2: Tank Open to Drain |

Concerning initialization for the analyzed application example, if the target state St ("Roily Water", "Clean Water", "Dirty Bottom", "Clean Bottom") corresponds to the initialization signal "Clear Water" or "Clean Tank Bottom" the automaton for the tank is initialized to an initial state, i.e. "S1: Tank In Normal (Closed) State". On the other hand, if the target state St ("Roily Water", "Clean Water", "Dirty Bottom", "Clean Bottom") corresponds to the initialization signal "Dirty Bottom" or "Roily Water" the automaton for the tank is initialized to an initial state SiA of S2: Tank Open to Drain.

The present invention further addresses a system 400 for managing one or more apparatuses 100. The system 400 is configured to carry out the method as described above.

The system 400 comprises one or more imaging devices 200 configured to capture image streams of the environment 10. Preferably, the imaging device 200 includes a camera 220 configured to capture the image streams. More preferably, the camera 220 is configured to capture the first image stream and preferably also the second image stream. In particular, the camera 220 is configured to capture images of the environment 10 in which it is located as well as the corresponding field of view 11.

According to a preferred embodiment, the camera 220 comprises optical sensors, for example of RGB type for color pickup of the first image stream, and preferably one or more infrared sensors for infrared shooting. Preferably, the sensors comprise a global shutter, having no motion blur in moving shots. The sensors may have a specific Field of View (FOV) representing the horizontal and vertical viewing angles supported by each sensor. In other words, the optical sensors and the infrared sensors have an FOV that can determine the imaged area given a distance of the imaged environment.

According to a preferred embodiment, the use of optical and infrared sensors can generate, thanks to the method, a combined image stream in which each pixel of the first image stream is associated with a distance value, if available according to the above described steps.

Preferably, the camera 220 is configured to operate with an adjustable frame rate and according to the environment in which the camera 200 is placed, as well as according to possible movements of targets relative to the camera.

According to an alternative embodiment, the imaging device comprises a camera for two-dimensional color shots (first image stream) and depth sensors (second image stream). Advantageously, the method 100 allows combination of the first and second image streams. According to a preferred embodiment, the camera is of the RGB-D type

It should be noted that the system 400 comprises one or more imaging devices 200 arranged in the selected environment 10 to monitor a field of view 11. Preferably, the system 400 comprises a plurality of imaging devices 200 arranged in one or more environments for simultaneous or offset capturing of image streams of one or more environments.

The system 400 comprises a data processing unit 210 associated with each imaging device 200. Preferably, each imaging device 200 comprises a data processing unit 210 in signal communication with the camera 220. The data processing unit 210 is configured to receive the image streams and process them by carrying out the above steps of the method 1. Preferably, the data processing unit 210 is configured to recognize one or more targets 12 and the corresponding target state St, to associate a label E with each recognized target 12, and a corresponding finite-state automaton (A), to initialize the finite-state automaton A, generate an assessment signal Sv to trigger the finite-state automaton A, send an action signal Sc to the one or more apparatuses 100 associated with the imaging device 200.

According to a preferred embodiment, the data processing unit 210 comprises a memory module configured to receive data, such as the first image stream and the second image stream, and processed data such as the bounding boxes, targets, target states. Preferably, the data processing unit 200 comprises a synchronization module in signal communication with the memory module, and configured to synchronize the first image stream and the second image stream, if any. This synchronization module is also configured to save the synchronizations on the memory module. The data processing unit 210 further comprises a detection module in signal communication with the memory module and configured to recognize targets and target states and associate corresponding bounding boxes, labels E and finite-state automata with the recognized targets 12. Preferably, the neural network-based algorithm resides in the detection module. More preferably, the detection module is in signal communication with a geolocation module to receive a specific neural network-based algorithm as a function of the environment and the targets located in the environment as well as specific finite-state automata. It should be noted that the detection module is configured to save the recognized targets 12, the target states St, the labels E and the finite-state automata A as well as the generated bounding boxes. in the memory module

According to the embodiment, the data processing unit 210 comprises:
- a counting module in signal communication with the memory module and configured to carry out the step of generating values for the dynamic targets Td and the static targets Ts. The counting module is also configured to save the data generated in the memory module; and/or
- a grading module in signal communication with the memory module and configured to carry out the step of calculating the dimension values for the static targets Ts and the dynamic targets Td. The grading module is also configured to save the data generated in the memory module;
- a measurement module in signal communication with the memory module and configured to carry out the step of calculating the relative distance values between static targets Ts and dynamic targets Td and saving them in the memory module,
- a module for the calculation of the management paths for the paths of dynamic targets Td.

Advantageously, the method and the system can reduce the necessary computational cost and resource expenditure by allowing on-site use of the imaging device, at EDGE level, requiring power supply only. In particular, due to the low computational cost and resource expenditure, the power supply may be provided directly on site with the imaging device 200 not being connected to a power line. For example, the power supply required by the imaging device may be provided by renewable sources, for example a solar panel, or pre-charged batteries.

Advantageously, the imaging device is cost-effective in that it uses modules able to execute a method that optimizes the use of resources.

The system 400 comprises one or more apparatuses associated with the imaging device 200 and arranged in an environment 10. Such apparatuses 100 are related to the environment 10 and can comprise either fixed devices, such as locks for intake works, or mobile devices such as, for example, a cellular phone or a smartphone which receives the indication signal for an available parking space.

According to a preferred embodiment, the system 400 comprises one or more sensors 300 configured to acquire one or more datasets Set for the target 12. Preferably, each sensor 300 is configured to be in signal communication with one or more imaging devices 200 to send target data. More preferably, each sensor 300 is configured to be associated with targets 12 located in the environment and recognizable by the method 1 of the present invention.

According to a preferred embodiment, the one or more sensors 300 comprise pressure, temperature or humidity sensors.

Preferably, the system 400 comprises a user interface 500 in signal communication one or more imaging devices 200 and configured to act on the data processing unit 210 to update and/or load, for example, finite-state automata A, reference target states Str or one or more algorithms.

## Claims

1. A method (1) of managing one or more apparatuses (100) arranged in an environment (10) using one or more imaging devices (200) in signal communication with the one or more apparatus (100), comprising the steps of:
a) cyclically capturing, by means of an imaging device (200) an image stream associated with a field of view (11) as viewed by the imaging device (200), the captured image stream comprising a plurality of temporally successive frames;
b) sending the image stream to a data processing unit (210) associated with the imaging device (200);
c) recognizing one or more targets (12) in the field of view (11) as captured in the image stream and a target state (St) for each recognized target (12), representative of the target (12);
d) associating a label (E) with each recognized target (12), and a finite-state automaton (A) as a function of the label (E), each finite-state automaton (A) comprising two or more automaton states (SA), automaton state transition signals (SpA) for transitioning from one automaton state to another and automaton holding signals (SmA) for holding the automaton state (SA) and action signals (Sc) for managing, enabling and/or disabling one or more apparatuses (100);
e) initializing each finite-state automaton (A) to an initial automaton state (SiA) selected from finite-state automaton states (SA) as a function of the target state (St);
f) generating an assessment signal (Sv) for each recognized target (12) as a function of the target state (St) between temporally successive frames;
g) triggering each initialized finite-state automaton (A) by executing an automaton state transition or an automaton state holding action, said step g) comprising the steps of
g1) executing an automaton state transition action by transitioning from the initial automaton state (SiA) to an altered automaton state (SfA) or from an altered automaton state (SFA) to another altered automaton state (SFA) if the assessment signal (Sv) corresponds to an automaton state transition signal (SpA) associated with the transition between one state and another and vice versa; and
g2) executing an automaton state holding action by maintaining the initial automaton state (SiA) or the altered automaton state (SfA) if the assessment signal (Sv) corresponds to the automaton holding signal (SmA) associated with the respective automaton state (SA);
h) sending an action signal (Sc) to one or more apparatuses (200) for each finite-state automaton (A) as a function of the combination of the automaton state transition signal (SpA) and the automaton state (SA) before the automaton state transition if the automaton state transition has occurred and as a function of the combination of the automaton holding signal (SmA) and the initial automaton state (SiA) or the altered automaton state (SfA) if automaton state holding has occurred;
i) managing the one or more apparatuses (200) as a function of the action signal (Sc) that has been sent.

2. A method (1) as claimed in claim 1, wherein the step of c) recognizing one or more targets encompasses identifying one or more static targets (Ts) in the field of view (11) as viewed by the imaging device (200), said step of c) recognizing one or more targets (12) comprising the steps of:
c1) recognizing one or more static targets (Ts) in the image stream as a function of successive frames;
c2) generating count values for the recognized static targets; and/or
c3) calculating size values for the recognized static targets, and/or
c4) calculating relative distance values between the recognized static targets.

3. A method (1) as claimed in claim 1 or 2, wherein the step of c) recognizing one or more targets (12) encompasses identifying one or more dynamic targets (Td), moving relative to the imaging device (200) in the field of view (11), said step of c) recognizing one or more targets (12) comprising the steps of:
c5) recognizing one or more dynamic targets (Td) in the image stream as a function of successive frames;
c6) calculating the path of each recognized dynamic target (Td);
c7) tracking each recognized dynamic target (Td) through temporally successive frames as a function of the path;
c12) generating count values for the recognized dynamic targets; and/or
c13) calculating size values for the recognized dynamic targets, and/or
c14) calculating relative distance values between the recognized dynamic targets;

4. A method (1) as claimed in any of claims 1 to 3, wherein the step of c) recognizing one or more targets encompasses recognizing the target state (St) by comparison between reference target states (Str), said step of c) recognizing comprising the steps of:
c8) identifying target characteristic reference parameters for each recognized target (12);
c9) generating a target state signal (SSt) as a function of the reference parameters;
c10) comparing the target state signal (SSt) with the reference target states (Str);
c11) associating a target state (St) with the recognized target (12) as a function of the comparison by selecting from the reference target states (Str).

5. A method (1) as claimed in any of Claims 1 to 4, wherein the step f) of generating an assessment signal encompasses generating an assessment signal (Sv) by comparing the target states (St) in temporally successive frames.

6. A method (1) as claimed in any of claims 1 to 5, wherein the step d) of associating encompasses keeping said label (E) and said finite-state automaton (A) associated with the recognized target (12) in temporally successive frames.

7. A method (1) as claimed in any of claims 1 to 6, having the steps of:
l) acquiring one or more datasets (Set) for a recognized target (12) by means of one or more sensors (300) associated with targets (12) and in signal communication with the imaging device (200);
m) associating the datasets (Set) with their respective recognized target (12) to recognize the target state (St),
n) generating an assessment signal (Sv) as a function of the comparison between target states (St) in temporally successive frames and as a function of the datasets (Set).

8. A method (1) as claimed in any of claims 1 to 7, wherein said step h) of sending an action signal comprises the steps of
h1) selecting an action signal (Sc) from the action signals of the finite-state automaton (A) as a function of the combination of the automaton state transition signal (SpA) and the automaton state (SA) before the automaton state transition if the automaton state transition has occurred and as a function of the combination of the automaton holding signal (SmA) and the initial automaton state (SiA) or the altered automaton state (SfA) if automaton state holding has occurred;
h2) selecting one or more apparatuses (100) associated with the imaging device (200); h3) sending the action signal (Sc) to the one or more selected imaging devices (200).

9. A method (1) as claimed in claims 1 to 8, wherein the apparatuses to be managed are lock apparatuses in intake works and/or in collection tanks in hydroelectric applications, wherein the finite-state automaton (A) comprises:
- a closed tank state and an open tank state, state holding signals and state transition signals associated with the degree of dirt in the tank and in water and action signals associated with opening and closing of a lock device, and/or
- a closed tank state and an open tank state and state holding signals and state transition signals associated with the degree of clogging of a water grate and action signals associated with opening and closing of a lock device.

10. A system (400) for managing one or more apparatuses (100) configured to implement the method as claimed in any of claims 1 to 9 and comprising:
- an imaging device (200) configured to capture an image stream;
- one or more apparatuses (100) associated with the imaging device (200) and arranged in an environment (10);
- a data processing unit (210) associated with the imaging device (200) and configured to:
- recognize one or more targets (12) and their target state (St);
- associating a label (E) with each recognized target (12), as well as a corresponding finite-state automaton (A);
- initialize the finite-state automaton (A);
- generate an assessment signal (Sv) to trigger the finite-state automaton (A);
- send an action signal (SC) to the one or more apparatuses (100) associated with the imaging device (200).
